# FASCICULE DE BREVET EUROPEEN

(11) **EP 2 632 674 B1**
(45) Date de publication et mention de la délivrance du brevet: **19.07.2017**
(21) Numéro de dépôt: 11791016.6
(22) Date de dépôt: 25.10.2011
(51) Int. Cl.: B29C 33/38, B29C 70/34, B29C 70/44

(54) **APPAREIL POUR LE MOULAGE DE MATERIAUX COMPOSITES**
VORRICHTUNG ZUM FORMEN VON VERBUNDWERKSTOFFEN
APPARATUS FOR MOLDING COMPOSITE MATERIALS

(30) Priorité: 28.10.2010 FR 1004233
(43) Date de publication de la demande: 04.09.2013
(73) Titulaire: H-PreC, 06514 Carros Cedex (FR)
(72) Inventeur: CRASSOUS, Dominique, 06100 Nice (FR)
(74) Mandataire: Decobert, Jean-Pascal
(86) Numéro de dépôt international: PCT/FR2011/000571
(87) Numéro de publication internationale: WO 2012/056122

(56) Documents cités:
- EP-A2- 0 410 599
- WO-A1-00/53400
- WO-A2-2009/141592
- DE-A1-102004 025 704
- FR-A1- 2 846 271
- US-A- 5 108 532
- US-A1- 2004 145 092

## Description

L'appareil décrit dans ce brevet permet de fabriquer un produit composite moulé et de le maintenir en forme le temps nécessaire à la polymérisation de la matrice. Il permet de former, comprimer, maintenir en forme et modifier la température d'un composite à matrice polymérisable contenu entre deux membranes souples et étirables. Les caractéristiques de cet outillage permettent de mouler un produit sans que le composite soit au contact du moule et sans poche d'air résiduelle entre le moule et le composite. En outre, le coût du moule dans ce procédé n'est pas exponentiel en fonction des pressions et températures de pressage nécessaires à l'obtention d'une haute qualité de composite. L'appareil objet du brevet utilise des solutions techniques originales et permet un cycle de fabrication du composite qui apporte des réponses à plusieurs problèmes récurrents lors de la fabrication de produits composites à matrice polymérisable. Les gains sont significatifs en termes de temps de travail, de coût du moule et de qualité du produit fini comparativement aux autres méthodes connues.

Ce type de produit composite est habituellement réalisé avec des presses dans lesquelles sont insérés des moules métalliques ou en résine. Le coût et la difficulté de réalisation des moules ainsi que les matériaux coûteux qui les composent rendent les produits finis chers. La qualité de finition des moules détermine la qualité de finition de surface de la pièce et cela augmente la difficulté de fabrication et renchérit le coût. Ce type de production est principalement adapté à la grande série. Dans la plupart des procédés, le composite est au contact direct du moule et cela impose des opérations de préparation et d'entretien du moule entre les phases de fabrication. La mise en place des renforts imprégnés ou non impose une phase manuelle dont la maîtrise est fonction de la compétence de l'opérateur. Des procédés connus et maîtrisés comme le « RTM » (Resin Transfert Moulding) permettent de réaliser des pièces rapidement avec une qualité constante mais rendent le compactage des renforts impossible ce qui interdit la fabrication de pièces de haute qualité mécanique.

La fabrication de pièces composites par stratification, infusion ou injection dans des moules ouverts impose un fini parfait du moule dont le coût est de toute manière élevé. Le temps de travail important dû aux nombreuses opérations successives nécessaires à la fabrication de la pièce finie renchérit le coût unitaire.

Cette méthode convient aux petites séries à très forte valeur ajoutée. La répercussion des frais d'outillage sur le prix des pièces est une des raisons qui rendent cette méthode rentable pour des pièces de grande taille pour lesquelles le moulage en une seule opération représente un gain de productivité. Les exemples les plus connus sont ceux des coques et des ponts de navires de plaisance ou des piscines en polyester.

Une autre catégorie d'outillages est constituée par les presses à membrane qui compactent et maintiennent le composite sur le moule en utilisant les propriétés physiques d'un fluide. Qu'il s'agisse d'air lors d'une simple prise sous vide ou d'un gaz ou d'un liquide dans une enceinte close, le principe reste le même : le composite est au contact du moule sur lequel il est appliqué et plaqué par la pression du fluide. L'évacuation de l'air entre le moule et le composite reste un problème à solutionner pour tous les procédés. Le drapage des tissus de renfort sur le moule avant ou après imprégnation par la matrice et la préparation du moule lui-même restent des opérations longues et délicates. Les autoclaves utilisés dans la plupart des fabrications imposant une qualité mécanique optimale seront rangés dans la catégorie des presses à membrane considérant que les problèmes qu'ils posent et les avantages qu'ils apportent sont très similaires.

Le document EP-A1-0410599 décrit une méthode de moulage de matériaux composites, avec une surface de mise en forme du matériau, le matériau à mouler étant placé entre deux membranes. Un système de mise sous pression par le dessus du moule assure la déformation du matériau pour sa mise en forme dans le moule. Cette mise sous pression est compensée par un vide par le dessous du moule.

Le document WO-A1-00/53400 montre aussi un appareil de moulage mais où le matériau composite est directement au contact du moule.

Le document US 5 108 532 présente sensiblement les mêmes caractéristiques que EP-A1-0410599 avec une mise au vide du dessous du moule.

Le document DE-A1-102004025704 montre un appareil complexe de moulage où le moule repose sur un lit de sable.

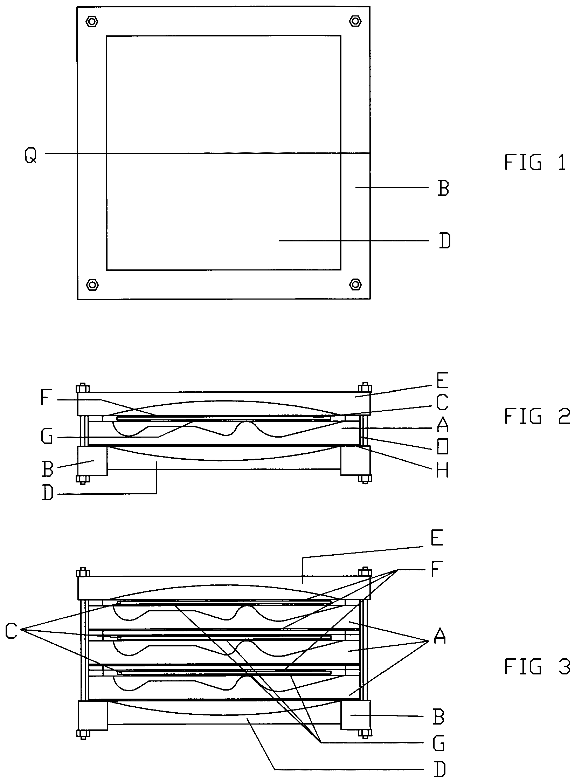

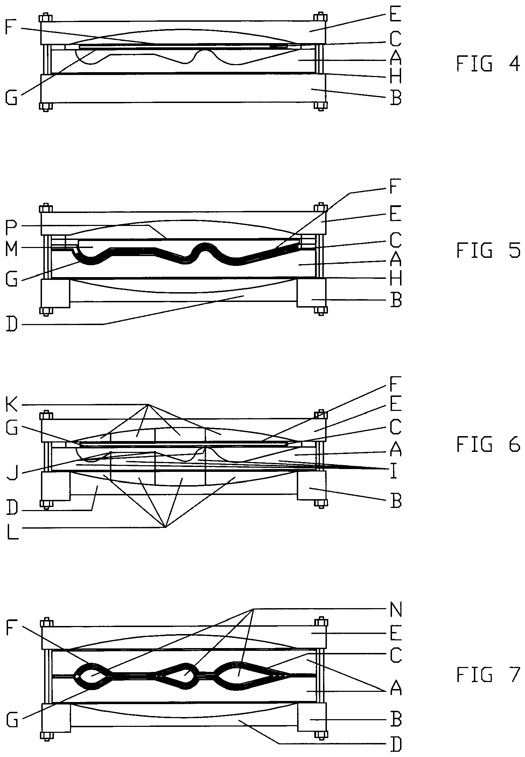

L'appareil objet du brevet (Fig.1) vue en coupe (Q) (Fig.2 à fig.10) est constitué d'une enceinte inférieure (D) et d'une enceinte supérieure (E) disposées chacune de part et d'autre du moule (A) et maintenues relativement à un châssis (B) rigide permettant la conformation de la partie périphérique du moule pendant la phase de pressage. Le châssis (B) est suffisamment rigide et stable dimensionnellement pour assurer que la zone du moule (A) maintenue par le châssis restera dans la limite de tolérance de forme souhaitée pendant toute l'opération de fabrication effectuée avec l'appareil. Les enceintes supérieure (E) et inférieure (D) auront la capacité de résister aux contraintes de fonctionnement de l'appareil mais pourront être souples ou rigides à compter du moment où elles permettront d'obtenir les pressions de fonctionnement souhaitées. L'étanchéité de l'enceinte inférieure (D) est réalisée soit par l'insertion d'une membrane souple maintenue en périphérie relativement au châssis (B) soit par une étanchéité de surface de la partie inférieure du moule (A) qui assure de par ce fait l'étanchéité de l'enceinte inférieure (D). Dans un mode de réalisation non couvert par l'invention l'enceinte inférieure (D) peut être supprimée (Fig. 4) à la condition que le châssis (B) maintienne le moule (A) sur toute sa surface inférieure (Fig. 2) considérant que le châssis (B) assurera le maintien du moule (A) dans les limites de déformation fixée pour le produit fini et ce pendant toute les phases de la fabrication ainsi que, si besoin, l'étanchéité de la partie du châssis (B) remplaçant l'enceinte inférieure (D) de l'appareil.

Le composite (C) est contenu entre deux membranes (G, F) souples et étirables étanches à la matrice polymérisable du composite et adhérentes ou non à la matrice du composite et séparant l'enceinte (E) du moule (A). Les éléments composites (C) constitutifs de la pièce finale sont contenus entre ces deux membranes (G, F). Les membranes (G, F) peuvent être ou non partie du produit final. Les membranes (G, F) sont maintenues en périphérie de l'enceinte (E) de pressage de telle sorte que la pression d'un fluide puisse être maîtrisée dans les zones autour des membranes (G, F), côté enceinte (E) ou côté moule (A). De la sorte, lors de l'opération de formage, l'extension isobare progressive et maîtrisée de l'ensemble ou d'une partie des membranes (G, F) contenant le composite (C) poussées par un fluide contenu dans l'enceinte formée entre la membrane (F) et l'enceinte (E) pour les faire plaquer sur le moule (A) se fait en limitant les risques de plis ou de déformations parasites dans les renforts du composite (C) ou à la surface des membranes (G, F). Dans ce cas, la déformation des fibres du renfort peut être modélisée et le calcul des caractéristiques mécaniques du matériau composite fini est plus facile.

Les membranes (G, F) utilisées pour contenir le composite (C) et/ou séparer les zones dans l'appareil peuvent être composées de matériaux souples déformables et résistant à la chaleur comme par exemple les membranes silicone conçues à cet usage et employées dans la plupart des presses à membrane. Dans l'appareil décrit dans ce brevet, les membranes (G, F) peuvent aussi être composées de matériaux bon marché et considérées comme du consommable. Certains films souples étirables ont des propriétés de déformation sous pression à certaines températures qui font qu'ils épousent la forme du moule (A), le plus souvent sans possibilité de retour à leur forme initiale après la fin de l'opération de pressage mais conservent leur étanchéité pendant les phases du pressage et de la polymérisation de la matrice.

La zone entre les membranes (G, F) contenant le composite (C) est close ou non selon la manière dont sera fabriqué le composite (C). Le composite (C) peut être fabriqué, entre les membranes (G, F) par toutes les méthodes traditionnelles. La méthode employée pourra par exemple être ; une stratification par application manuelle de matrice sur un renfort, avec mise sous vide ou non du résultat; un drapage manuel de tissus pré-imprégnés ; une infusion ou injection de matrice dans un renfort, avant ou après mise en forme du renfort, et plus généralement tout type de procédé à la seule condition que cette construction soit réalisée entre les deux membranes (G, F) souples et étirables. Le composite (C) contenu entre les deux membranes (G, F) est mis en forme sur un moule (A) comme le serait une tôle métallique dans un procédé d'hydroformage ou entre un moule et un contre moule comme une tôle dans une presse à emboutir. Le composite (C) est ensuite maintenu en forme par le fluide en pression contenu par l'enceinte (E) contre la membrane (F) le temps nécessaire à la polymérisation de la matrice jusqu'à obtenir une pièce conformée au moule (A) et stable dimensionnellement.

Les caractéristiques principales du moule (A) sont la capacité des matériaux le constituant à résister à la pression des fluides dans l'enceinte de l'appareil et une porosité de surface au moins sur les surfaces ou la pièce est formée.

La pression d'un fluide dans l'enceinte supérieure (E) vient conformer les membranes (G, F) contenant le composite (C) à la surface du moule (A). La porosité du moule (A) permet de mettre en forme les membranes (G, F) et le composite (C) qu'elles contiennent contre la surface du moule sans qu'il soit nécessaire d'aménager des évents dans le moule. L'air peut être chassé de la zone (L) entre la membrane (G) et le moule (A) par le gradient de pression entre l'intérieur de la zone (L) et l'extérieur. La mise sous vide de la zone (L) comprise entre le moule (A) et la membrane (G) peut être réalisée complètement quelle que soit la forme de la pièce à la condition d'avoir clos la périphérie du moule et l'avoir équipé des accessoires permettant l'usage d'une pompe à vide pour assurer la mise sous vide de la zone (L). Aucune poche d'air ne peut de la sorte être emprisonnée entre le moule (A) et la membrane (G) contenant le composite (C) au contact du moule pendant la phase de formage.

La porosité de surface du moule (A) permet aussi de faire varier à tout moment et de manière homogène la pression d'un fluide entre le moule (A) et la membrane (G) au contact du moule (A).

Grâce à la porosité de surface du moule (A), le démoulage de la pièce (C) une fois formée peut être réalisé en mettant en surpression la zone (L) entre le moule (A) et la membrane (G) au contact du moule (A). La porosité de surface du moule (A) permet de répartir la pression sur la membrane (G) de manière homogène et éviter ainsi, lors de l'extraction, les délaminages inévitables si les propriétés mécaniques du composite (C) ne sont pas encore optimales.

Le moule (A) peut être réalisé dans de nombreux matériaux ayant les deux caractéristiques énoncées ci-avant soit : porosité de surface et résistance à la pression et à la température de fonctionnement de l'appareil

En pratique, le moule (A) peut être réalisé en surface ou en totalité dans des matériaux peu coûteux comme des mousses poreuses ou des agglomérés de bois ou être constitué d'un matériau recouvert d'un traitement de surface permettant le drainage d'un fluide vers l'extérieur de la surface sur laquelle le composite (C) est mis en forme.

Des zones dans l'appareil sont délimitées par les membranes (G, F), l'enceinte et le moule (A). Dans ces zones, le type de fluide, leur pression et leur température peuvent être maîtrisés séparément grâce à des orifices d'accès et un ensemble de périphériques adaptés.

Pendant l'opération de pressage, le moule (A) est contraint sur ses faces supérieures et inférieures par les actions des fluides contenus à l'intérieur des enceintes (D, E) ou contraint sur sa face supérieure par l'action du fluide dans l'enceinte supérieure (E) sur la membrane (F) et maintenu sur sa face inférieure par un support rigide (P) solidaire du châssis (B) de maintien.

Quand le moule (A) est maintenu par le châssis (B) entre les enceintes supérieures (E) et inférieures (D) de l'appareil et que des fluides appliquent une pression sur ses surfaces inférieure et supérieure, les pressions peuvent être maîtrisées sur ces deux faces du moule (A) pendant que sa périphérie est maintenue à une forme prédéfinie par le châssis (B) de l'appareil. De la sorte une rigidité structurelle importante n'est plus un paramètre majeur lors de la conception du moule (A) puisqu'il est possible de maîtriser sa déformation entre la périphérie et le centre en modifiant les pressions des fluides contenus dans les enceintes supérieures (E) et inférieures (D).

Dans cet outillage, en considérant la rigidité du châssis (B) qui assure le maintien de la périphérie du moule (A), la pression appliquée sur le moule (A) peut être décomposée en deux composantes.

La première est la résultante de toutes les forces normales au plan formé par le châssis (B) de l'appareil maintenant le moule (A); ces pressions peuvent s'équilibrer et dans tous les cas leur différentiel peut être maîtrisé en réglant les pressions dans les enceintes inférieures (D) et supérieures (E) de l'appareil. Pour ces forces, la résistance du ou des matériaux constituant le moule (A) à la déformation sous pression est le seul critère qui nous intéresse.

La seconde est la résultante horizontale des forces générées par la mise en pression des fluides dans les enceintes (D, E). Dans le cas de moules ayant un creux important, ces forces parallèles au plan du châssis (B) de maintien peuvent être importantes et provoquer des tractions dans le moule (A) pouvant aller jusqu'à la rupture du ou des matériaux le constituant. Pour résoudre ce problème, le moule (A) sera doté d'un ou plusieurs renforts (H) parallèles au plan dans lequel le châssis (B) maintient le moule (A) en position, réalisés dans un matériau résistant aux contraintes en traction générées sur lui par l'appareil. Ces renforts (H), solidaires du moule (A), peuvent être constitués par exemple par des plaques composite fibre et résine ou par des tôles métalliques. De la sorte, et grâce à l'action de ces renforts (H), les contraintes dans le moule (A) peuvent être décomposées et résumées à des contraintes en compression sur les faces opposées aux enceintes (D, E) contenant les fluides, à des contraintes en traction parallèles au plan dans lequel le châssis (B) de l'appareil maintient le moule. Ces dernières forces sont reprises en traction dans le plan de renfort et en cisaillement dans le matériau du moule (A) situé dans les zones maintenues en périphérie du moule par le châssis (B) de l'appareil.

L'introduction, dans les enceintes (D, E) de liquides incompressibles correspondant au volume théorique exact des cavités définies lorsque le matériau composite (C) est conformé sur le moule (A) permet, quand les liquides sont mis en pression de garantir la parfaite conformation de la pièce sur le moule (A). Un liquide incompressible utilisé pour gérer la mise en forme du composite (C) et mettre les enceintes (D, E) en pression a en outre l'avantage de permettre l'utilisation de hautes pressions de travail sans que le système ne présente de risque explosif à l'inverse des autoclaves dans lesquels une grande quantité de gaz est mise en pression. Ceci simplifie d'autant la mise aux normes de sécurité de l'appareil ainsi que son contrôle et son entretien.

La pression peut varier de manière indépendante dans toutes les zones closes de l'appareil. De cette manière, la déformation des membranes (G) et (F) contenant le composite (C) peut être maîtrisée et optimisée.

L'importance de cette fonction est due au fait que l'opération de mise en forme du composite (C) sera effectuée différemment selon la forme du moule (A) et donc la contrainte qu'il fera subir aux membranes (G) et (F) contenant le composite durant la phase de conformation du composite (C) sur le moule (A). La pression dans l'enceinte (E) peut être élevée de manière à compacter le plus possible le matériau composite (C) avant polymérisation de la matrice, réduire au minimum les poches d'air ou de vide incluses dans le matériau composite (C) et optimiser le positionnement des renforts entre eux ainsi que le positionnement de l'ensemble des matériaux constituant le composite (C) sur le moule (A). Cette pression est obtenue habituellement dans des fours autoclaves par l'augmentation de la pression de l'air autour de la pièce jusqu'à des pressions de l'ordre de 8 à 10 bars qui sont habituellement utilisées pour des pièces mécaniques destinées à être fortement sollicitées. Ces enceintes à haute pression sont très délicates et coûteuses à réaliser considérant le risque explosif en cas de rupture de l'enceinte. Dans l'appareil objet du brevet, la surpression peut être obtenue à l'aide d'un fluide non compressible à l'état liquide, tel que l'eau ou l'huile. Cette caractéristique rend aisée la mise en pression et la chaleur massique importante de certains de ces fluides permet d'obtenir une régulation efficace de la température dans l'appareil. De la sorte, la température peut être maintenue basse pour bloquer ou ralentir la polymérisation de la matrice du composite ou augmentée de manière régulée pendant la phase de polymérisation de la matrice.

Selon les températures de formage et de cuisson souhaitées on choisira des fluides différents. Plusieurs fluides peuvent être utilisés en fonction des applications ou des phases successives d'une même fabrication (eau à partir de 0°C et plus pour le formage et huile à plus de 100°C pour cuisson par exemple). Plusieurs moules (A) (Fig. 3) avec leurs jeux de membranes (G) et (F) peuvent être maintenus sur le même châssis (B) en conservant à l'appareil les mêmes fonctionnalités de travail qu'avec un seul moule (A). La seule contrainte consiste à travailler avec des moules (A) pour lesquels les pressions de travail sont compatibles.

Des zones de référence ou des repères fixes peuvent être aménagés sur le moule (A) de façon à permettre sa mise en place dans un repère normé. Grâce à ces repères et à la porosité de surface du moule (A), le composite (C) obtenu après conformation au moule (A) et polymérisation de la matrice peut être maintenu en position par dépression sur le moule (A), lequel est positionné sur un centre d'usinage numérique. L'usinage de finition peut être réalisé rapidement, dans les meilleures conditions de maintien et de précision. Le moule (A) peut donc servir alternativement de moule (A) de formage et de support pour le maintien de la pièce formée lors de son usinage sur un centre d'usinage numérique. Le moule (A) peut aussi être utilisé comme conformateur en maintenant une pièce par mise sous vide sur celui-ci pendant que la matrice polymérise ou que d'autres pièces sont assemblées sur la pièce ainsi maintenue.

Pour maintenir le moule (A) à sa forme initiale pendant le travail dans l'appareil, deux solutions peuvent être utilisées.

La première consiste à mettre le moule (A) dans l'appareil de telle façon qu'une fois que le moule (A) est maintenu en périphérie par le châssis (B) et avant que les enceintes (D, E) soient mises en pression, le moule (A) ait la forme finale souhaitée. Ensuite, la déformation des enceintes (D, E) relativement au châssis (B), lors de la mise en pression, sera identique des deux côtés du moule (A) quand les enceintes supérieures (E) et inférieures (D) seront à la même pression. De la sorte l'augmentation de pression dans l'appareil causera une variation de volume identique pour les enceintes (D, E) pendant que le moule (A) restera fixe par rapport au châssis (B) l'appareil.

La deuxième solution consiste à introduire un système de mesure de position du moule (A) par rapport au châssis (B) permettant à tout moment de connaître la position de certains points de référence du moule (A) par rapport au châssis (B) qui constitue la zone de référence de l'appareil. Grâce à ce système, il sera possible de faire varier la pression séparément dans les enceintes supérieure (E) et inférieure (D) de manière à régler la position du moule (A) relativement au châssis (B) et donc à sa propre zone périphérique qui est maintenue par ce même châssis.

Il est possible de séparer la surface du moule (A)(Fig. 6) sur laquelle le composite (C) doit être conformé en plusieurs zones à l'aide de joints (J) permettant de déterminer différentes zones (I) dans lesquelles les pressions de fluides pourront être régulées séparément. L'enceinte (E) en vis-à-vis du moule (A) pourra être elle-même, si besoin, compartimentée en vis-à-vis des séparations des zones (I) effectuées dans le moule. Il en est de même si nécessaire pour l'enceinte (D) située sur la face inférieure du moule (A) qui peut être séparée en zones distinctes (L). Ceci permet de différencier les pressions de formage ou de compactage à la demande. Cet équipement permet aussi de réaliser des phases de mise sous vide et de compactage successives pour un même moule (A). L'équilibre étant obtenu zone par zone sur les faces supérieure et inférieure du moule (A), cette opération de pressage avec des pressions différenciées peut être obtenue en maîtrisant les déformations du moule (A) ainsi que sa position relativement au châssis (B).

Pour fabriquer des pièces creuses (Fig. 7), il est possible d'installer des moules (A) non pas de manière à réaliser des fabrications séparées superposées comme indiqué plus avant mais avec les faces sur lesquelles le composite (C) doit être conformé en vis-à-vis. Les membranes (G) et (F) contenant le composite (C) seront disposées dans l'appareil entre les deux moules (A). Des poches (N) souples et extensibles seront disposées dans le composite (C) contenu entre les deux membranes (G) et (F). Ces poches (N) seront équipées de telle sorte qu'il soit possible d'introduire un fluide dans chacune d'entre elles et d'en faire varier la pression conjointement ou indépendamment. Après polymérisation et selon les possibilités d'accès offertes par le produit fini usiné aux zones contenant les poches (N), les poches pourront être soit retirées du produit fini soit laissées à demeure à l'intérieur de ce produit. Dans ce type de fabrication, le principe général de fonctionnement de l'appareil reste identique au principe décrit plus avant.

Par injection de mousse ou par formage d'un matériau polymérisable entre deux membranes (G) et (F) qui déterminent la forme de la pièce finie, il est possible de fabriquer un contre moule (M) ou un moule conformateur sans passer par un usinage. Les moulages obtenus par cette méthode peuvent servir de contre moule (M)(Fig. 5) pour la mise en forme du composite (C) pendant l'opération de formage ou à conformer les pièces une fois qu'elles sont sorties de l'appareil, pour autant que cela soit nécessaire, jusqu'à la fin de la polymérisation de la matrice qui, selon le type de matrice utilisée et les conditions de température, peut aller de quelques minutes à plusieurs jours.

Dans le cas où un contre moule (M) total ou partiel relativement à la surface sur laquelle le composite (C) doit être conformé est utilisé lors de l'opération de fabrication, il est contenu dans une zone de l'appareil délimitée d'une part par la membrane (F) contenant le composite (C) et d'autre part par une membrane (D) le séparant de l'enceinte (E) de l'appareil. La pression des fluides dans la zone entre ces deux membranes (F) et (G) et dans l'enceinte (E) peut être régulée de manière séparée. Dans un premier temps la forme du contre moule (M) est poussée par la pression du fluide contenu dans l'enceinte supérieure (E) contre le moule (A). Si la situation restait en l'état, la pression serait maximale sur les surfaces normales à l'enceinte (E) et au contact du contre moule (M) et nulle sur les surfaces perpendiculaires à l'enceinte. Toutes les surfaces à des angles intermédiaires seraient contraintes différemment en fonction de l'angle et de l'épaisseur du composite (C). Dans l'appareil, la première mise en forme des renforts ou des renforts et de la matrice non polymérisée selon les cas peut être faite à l'aide du contre moule (M) qui assure une première mise en place. Dans un second temps, un fluide, compressible ou non, est introduit entre les membranes inférieure (F) et supérieure (P) contenant le contre moule (M). La mise en pression de ce fluide provoque une mise en pression homogène des membranes (F) et (G) contenant le composite (C) contre le moule (A) pendant la phase de polymérisation de la matrice comme cela serait le cas dans un autoclave. Cette caractéristique différencie notre procédé du procédé « RTM » (Resin Transfert Moulding »). Dans le « RTM », le moule et le contre moule sont fixes et la quantité de matrice est déterminée dès la fermeture du moule et du contre moule. Dans notre procédé, la mise en pression de la membrane (F) grâce à un fluide permet un compactage du composite (C) et une mise en place des fibres ainsi qu'une optimisation de la quantité de matrice et de renfort exactement comme c'est le cas dans un autoclave.

Dans le cas où le contre moule (M) est utilisé, le compactage du composite (C) à l'aide du fluide contenu dans l'enceinte contenant le contre moule peut générer un espace entre le contre moule et la membrane (F) contenant le composite. Cet espace peut être dû à une mauvaise optimisation du compactage dans la zone considérée ou à une forme du moule (A) ne permettant pas une mise en forme lors de la translation du contre moule (M). Dans ce cas et si c'est nécessaire pour donner à la pièce finie une côte précise, il est possible de réaliser la première mise en oeuvre du composite (C) qui, sera mis en forme, compacté puis polymérisera jusqu'à ce qu'une seconde injection de résine soit effectuée entre la membrane (F) contenant le composite située du côté du contre moule (M) et le composite déjà polymérisé. De ce fait la partie de la pièce obtenue lors de la première phase conservera ses propriétés mécaniques et la pièce finale sera ajustée à la forme souhaitée en une seule opération.

Dans le cas où la matrice est appliquée dans le renfort à l'état liquide c'est-à-dire dans le cas où l'on n'utilise pas des tissus pré imprégnés dont le rapport renfort matrice est optimisé, il est possible, dans l'appareil décrite, après avoir obtenu une imprégnation par infusion, injection, ou application manuelle de la matrice sur le renfort, de réaliser un compactage comme décrit ci-dessus. Après cette phase dont l'effet principal est d'optimiser la répartition et la position de la matrice et du renfort, il est possible, en ouvrant la zone entre les membranes (F) et (G) contenant le composite (C) soit sur l'extérieur, soit sur une zone en forte dépression par rapport à la pression établie dans les enceintes (D, E) de l'appareil, de faire fluer vers cette zone extérieure à l'appareil une partie de la matrice qui serait en quantité surabondante jusqu'à obtenir un ratio idéal souhaité entre matrice et renfort. Après cette phase, les ouvertures peuvent être laissées ouvertes ou refermées pour reprendre le compactage du composite (C) sans risque de faire fluer d'autre matrice vers l'extérieur de l'appareil.

Les problèmes rencontrés lors des productions de quantités importantes de pièces composites avec le système « RTM » sont liés à l'usure du moule qui conduit à utiliser des moules métalliques pour les grandes séries et à la maîtrise de la température entre les différentes fabrications qui s'avère difficile et très couteuse en énergie considérant l'inertie thermique des matériaux utilisés pour la fabrication des moules qu'il s'agisse de métaux ou de résines. L'usure est due en partie à l'entretien du moule comprenant des phases de préparation et de nettoyage induisant une abrasion et une agression chimique des surfaces. L'usure est due aussi au frottement des renforts sur le moule durant la fermeture de l'enceinte dans laquelle la matrice doit être injectée. Pour éviter que cette usure ne prenne des proportions trop importantes, des appareils spécialement conçus pour former les renforts sont utilisés avant d'introduire ces renforts dans les moules. De plus, pour une qualité optimale dans la fabrication d'un composite thermodurcissable, il est fondamental de maîtriser le cycle de température lors de la polymérisation afin d'optimiser la qualité du composite obtenu. Les moules métalliques ou en résine demandent beaucoup d'énergie pour être refroidis en fin de cycle et leur inertie thermique induit des temps de remise en température optimale très longs. Cet inconvénient induit automatiquement une baisse de la qualité lors des productions de grandes quantités de pièces composite avec les méthodes traditionnelles et des délais de fabrication importants. Dans l'appareil décrit dans le brevet, le composite (C) n'est pas directement au contact du moule (A) et le choix de membranes induisant peu d'abrasion lors de la mise en forme permet de cumuler gain de temps, en évitant le préformage, et la préservation du moule (A) qui n'est pas soumis aux agressions que représentent le nettoyage et l'application d'un démoulant chimique sur ses surfaces ainsi qu'à l'abrasion générée par la friction avec des matériaux aussi durs et abrasifs que la fibre de verre, d'aramide ou de carbone constituant les renforts des pièces composite.

Comme le problème de l'adhérence de la matrice au moule ne se pose pas, le choix des matériaux ou combinaisons de matériaux possibles pour fabriquer le moule est beaucoup moins limité avec le procédé décrit dans les présentes qu'avec les méthodes connues. Les céramiques sont des matériaux pouvant être poreux ou microporeux, disponibles sous forme de ciment ou de briques, usinables avec des outils parfaitement maîtrisés pour fabriquer des pièces en forme et résistant en compression à de très fortes pressions. Leur utilisation est donc parfaitement adaptée à la fabrication de moules pour l'appareil décrit.

Associées à un renfort (H) présentant une importante résistance en traction et une faible élongation comme décrit plus haut, ces céramiques apportent des avantages déterminants pour des fabrications en grande série réalisées avec l'appareil décrit dans ce brevet. La première qualité est la possibilité d'obtenir un fini de surface optimal en conservant une microporosité de la céramique propice à l'évacuation du volume de fluide emprisonné entre la membrane (G) et le moule (A). La deuxième qualité est une dureté de surface qui limite l'usure du moule (A) considérant par ailleurs qu'il n'est soumis qu'aux contraintes dues au contact avec la membrane (G) pendant le cycle de fabrication. La troisième qualité est la capacité d'isolation thermique des céramiques qui permet de maîtriser la température des composites pendant la polymérisation de la matrice uniquement à l'aide de la température des fluides contenus dans les enceintes (D, E) les variations de température du moule (A) influant très peu sur le processus. Il est de la sorte possible de réaliser chaque phase de fabrication à une température induite principalement par l'effet des fluides utilisés dans l'appareil sans incidence notable de la montée ou descente en température du volume du moule (A) comme c'est le cas avec les moules en métal ou en résine utilisés dans les procédés connus. Les céramiques étant un isolant thermique de très haute qualité, elles protègent de la transmission de chaleur le renfort inférieur (H) qui assure la résistance en traction du moule (A) lors de l'augmentation de pression.

De ce fait l'association de matériaux comme les composites matrice et renfort et plus particulièrement résine époxy ou phénolique et fibre de carbone est possible en lieu et place d'un renfort métallique même dans le cas d'utilisation de fluides à très haute température à la fin d'accélérer les cycles de polymérisation de la matrice du composite. Les résines époxy ou phénolique liant les fibres de carbone perdent leurs qualités mécaniques au-delà d'une certaine température comprise généralement entre 80 et 200 degrés selon les résines et il est possible de travailler en continu avec un moule en céramique renforcé sur sa face inférieure par un renfort sans que la face inférieure ne monte en température au-dessus des limites de résistance des résines citées. Grâce à l'isolation thermique offerte par la céramique il est possible de maîtriser les déformations dues aux différences de coefficient de dilatation des matériaux constituant le moule (A). Soit l'isolation thermique assurée par la céramique est suffisante pour que les différences de température au cours du cycle induisent une déformation négligeable en rapport des limites fixées par le cahier des charges du composite et du moule; soit il est nécessaire, considérant l'utilisation lors des phases de production de fluides employés à très haute température ou à très basse température, incluant le cas des chocs thermiques liés à la succession dans un délai de temps très bref de fluides très chauds et très froids dans les enceintes (D, E) de l'appareil, d'installer un dispositif dans la construction du moule (A) qui permet avec un équipement et des périphériques adaptés de réchauffer ou réfrigérer certaines zones du moule (A). L'isolation thermique assurée par la céramique réduira considérablement le besoin de régulation thermique à l'intérieur du moule (A) pour obtenir le résultat escompté en matière de contrôle de la stabilité de forme du moule (A).

Les matériaux céramiques poreux ou microporeux ont une excellente résistance en compression aux pressions utilisées dans l'industrie pour la mise en forme et le compactage des composites. Ils supportent plus mal les contraintes en flexion, torsion et traction. Comme nous l'avons vu plus haut il est possible de les associer à des renforts auxquels ils sont liés et qui assurent la résistance du moule (A) en traction et au châssis périphérique (B) dont la rigidité assure la maîtrise de la torsion, la pression dans l'enceinte inférieure (D) ou le support du plateau (Fig. 4)(B) contrôlant la flexion du moule (A).

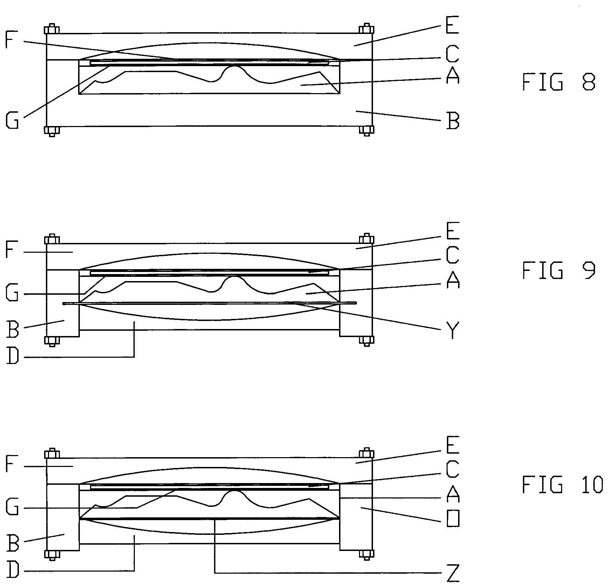

Une autre solution consiste à intégrer le moule poreux au moins sur la surface sur laquelle le composite (C) est formé dans l'appareil, équipé des voies et des périphériques permettant l'évacuation des fluides vers l'extérieur de l'enceinte de l'appareil (Fig. 8 à fig. 10), entre la membrane (G) et, soit un plateau (B)(Fig. 8), soit une cloison rigide dont la forme est contrôlée par un fluide (Y Fig. 9), soit une membrane souple (Z)(Fig. 10) délimitant une enceinte dans laquelle il est possible de maitriser la pression d'un fluide. La forme de la partie périphérique du moule est telle que lorsque l'appareil est à sa pression de service, le moule reçoit sur l'ensemble de sa surface extérieure une pression isobare appliquée par la membrane (G) sur sa face supérieure et la membrane (Z)(Fig. 10) sur sa face inférieure ou une pression isobare sur sa face supérieure équilibrée par la résistance du plateau (B)(Fig. 8) ou de la cloison (Y)(Fig. 9) sur sa face inférieure.

## Revendications

1. Appareil destiné à former et compacter un composite (C) doté d'une matrice, ledit appareil comportant :
deux membranes (G, F) souples et étirables aptes à contenir le composite (C) en étant adhérentes ou non au composite (C) et à le maintenir sur un moule (A) de mise en forme pendant la polymérisation de la matrice, le moule (A) étant constitué d'un ou plusieurs matériaux résistant en compression à la pression appliquée par la membrane (F) sur le composite (C),
un châssis (B) maintenant les deux membranes (G, F) et le moule (A) en leur périphérie et relativement entre eux,
une enceinte supérieure (E) recevant un premier fluide dont la pression est variable à l'intérieur de l'enceinte supérieure (E), l'enceinte supérieure (E) étant séparée du moule (A) par les deux membranes (G, F),
**caractérisé en ce qu'**il comporte une enceinte inférieure (D) recevant un deuxième fluide et des moyens de régulation de la pression dudit deuxième fluide à l'intérieur de l'enceinte (D) configurés pour faire varier la pression dudit deuxième fluide sur la surface inférieure du moule (A) et par voie de conséquence pour contrôler la déformation du moule (A) pendant que la pression du premier fluide varie dans l'enceinte supérieure (E), les enceintes supérieure (E) et inférieure (D) étant disposées de part et d'autre du moule (A),
et dans lequel le moule (A) est maintenu en périphérie relativement au châssis (B) et est poreux au moins sur la surface sur laquelle le composite (C) est apte à être conformé, afin d'éliminer tout fluide contenu entre le moule (A) et la membrane (G) par gradient de pression des premier et deuxième fluides lors de la mise en forme du composite (C) à la surface du moule (A).

2. Appareil selon revendication 1 **caractérisé en ce qu'**au moins l'une des deux membranes (G, F) est en un matériau adhérent au composite (C) de sorte à former le revêtement de surface d'une pièce finale par adhérence à la matrice lors de la polymérisation de celle-ci.

3. Appareil selon les revendications 1 et 2 comprenant un renfort (H) maintenu en périphérie par le châssis (B) présentant une résistance en traction configuré pour que son élongation lors de la mise en pression des fluides à l'intérieur de l'appareil soit dans tous les cas inférieure à la limite de rupture en traction du ou des matériaux constituant le volume du moule (A) sur lequel le composite (C) est apte à être formé lorsque l'appareil est dans sa plage de température et de pression de service.

4. Appareil selon l'une quelconque des revendications 1, 2 et 3 comprenant des voies aménagées en périphérie des membranes (G, F), les voies permettant, grâce à des périphériques adaptés, la maîtrise de la mise sous vide complet ou relatif de la zone comprise entre les membranes (G,F), la maîtrise de l'injection de la matrice du composite (C) entre les membranes (G,F) et la maîtrise du drainage vers l'extérieur du volume compris entre les membranes (G, F) d'un éventuel excès de matrice par le fait d'un gradient de pression entre la pression dans les enceintes à l'intérieur de l'appareil et la pression régnant dans la zone vers laquelle la matrice est extraite.

5. Appareil selon l'une quelconque des revendications 1, 2, 3 et 4 comprenant des zones dans le moule (A) délimitées par des joints d'étanchéité (J) en surface du moule, en vis-à-vis ou non de poches séparées dans des enceintes de pressage supérieure (K) et inférieure (L), de telle sorte que la pression d'un fluide puisse être gérée séparément dans les différentes enceintes comprises entre les zones du moule (A) ainsi délimitées et la membrane inférieure (G) contenant le composite (C) et se trouvant au contact du moule (A) tout en conservant la possibilité de maîtriser la déformation du moule sur lequel le composite (C) est apte à être conformé relativement au châssis (B) en influant sur la pression de fluides à l'intérieur des poches dans l'enceinte inférieure (L) et supérieure (K).

6. Appareil selon l'une des revendications 1 à 5 **caractérisé par le fait que** le volume du moule (A) est en céramique poreuse ou microporeuse.

7. Appareil selon l'une des revendications 1 à 6 **caractérisé par le fait que** au moins la surface du moule sur laquelle le composite (C) est formé est en céramique poreuse ou microporeuse.

8. Appareil selon les revendications 3, 6 et 7 **caractérisé par le fait que** le renfort (H) intégré au moule (A) et assurant la résistance en traction du moule (A) est constitué d'un composite matrice et fibre de carbone.

9. Appareil selon les revendications 3, 6, 7 et 8 dans lequel le moule (A) comprend un revêtement en céramique d'isolation thermique de la surface de mise en forme du composite (C) de sorte à réduire l'amplitude thermique dans la masse du moule (A) permettant l'usage de matériaux ayant des coefficients de dilatation différents pour la fabrication du moule (A) sans conséquences dues aux températures des fluides utilisés dans l'appareil.

10. Appareil selon revendications 3, 6, 7, 8 et 9 comprenant des équipements configurés pour réchauffer ou réfrigérer le moule (A) de sorte à maîtriser la dilatation des matériaux constituant le moule (A) indépendamment des températures des fluides utilisés dans l'appareil.

11. Appareil selon revendications 1, 2, 4, 5, 6, 7, 9 et 10, **caractérisé en ce que** le moule (A), poreux au moins sur la surface de mise en forme du composite (C), est installé dans l'appareil, équipé des voies et des périphériques permettant l'évacuation des fluides vers l'extérieur de l'enceinte de l'appareil, entre la membrane (G) et, soit un plateau (B), soit une cloison rigide (Y) dont la forme est contrôlée par un fluide, soit une membrane souple (Z) délimitant une enceinte dans laquelle il est possible de maitriser la pression d'un fluide ; la forme de la partie périphérique du moule (A) est telle que lorsque l'appareil est à sa pression de service, le moule (A) reçoit une pression isobare appliquée par la membrane (G) sur sa face supérieure et la membrane (Z) sur sa face inférieure ou une pression isobare sur sa face supérieure équilibrée par la résistance du plateau (B) ou de la cloison (Y) sur sa face inférieure.

12. Appareil selon l'une des revendications précédentes, dans lequel le premier et le deuxième fluide sont des liquides incompressibles.

13. Procédé de formage et de compactage d'un composite (C) comportant une matrice, comprenant l'utilisation d'un appareil selon l'une des revendications précédentes, et la mise en forme et le maintien du composite (C) dans le moule (A) pendant la polymérisation de la matrice.

14. Procédé selon la revendication précédente comportant une régulation de la pression et de la température des fluides dans les zones de l'appareil où circulent des fluides à l'aide d'accès et de périphériques adaptés.

15. Procédé selon l'une des deux revendications précédentes comprenant un maintien en position du composite (C) après polymérisation de la matrice par une mise en dépression de la zone entre le moule (A) et le composite (C) du fait de la porosité de la surface du moule (A) permettant de maîtriser de manière homogène la pression d'un fluide entre le composite (C) et le moule (A).

16. Procédé selon l'une des revendications 13 ou 14 dans lequel un contre moule (M) ayant des caractéristiques similaires à celles du moule (A) est introduit en vis-à-vis du moule (A), séparé du composite (C) par une membrane (F); et dans lequel, lors de la phase suivante, la membrane recouvrant le contre moule (M) est poussée par un fluide vers le moule (A) pour homogénéiser la pression supportée par les membranes contenant le composite (C), la pression étant maintenue le temps nécessaire à la polymérisation totale ou partielle de la matrice, après quoi, soit une résine polymérisable est injectée ou infusée entre le composite (C) et la membrane supérieure (F) contenant le composite (C) sur la face en vis-à-vis du contre moule (M) dans le but de conformer à la forme du contre moule (M) la partie de la pièce en vis-à-vis de celui-ci, soit une vessie (N) est gonflée à l'aide des voies et périphériques adaptés pour déplacer les éléments du composite contenus entre les membranes (G, F) vers le moule (A) pour une partie et vers le contre moule (M) pour l'autre partie; le contre moule (M) présentant une porosité de surface au moins sur la zone en vis-à-vis de laquelle le composite (C) est mis en forme de telle sorte que la pression du fluide permettant le compactage du composite (C) sur le moule (A) puisse être maîtrisée de manière homogène sur toute la surface et permette le déplacement régulier de la membrane (F) vers le contre moule (M) et l'évacuation du fluide contenu entre la membrane (F) et le contre moule (M) vers l'extérieur de la zone de pressage par gradient de pression lors de la phase d'injection de résine après polymérisation complète ou partielle du composite (C) compacté lors de la première phase ou lors du gonflage de la vessie permettant de déplacer le composite entre les membranes (G, F).

## Patentansprüche

1. Gerät, das dazu bestimmt ist, einen mit einer Matrix versehenen Verbundwerkstoff (C) zu formen und zu verdichten, wobei das besagte Gerät Folgendes umfasst:
zwei flexible und dehnbare Membrane (G, F), die imstande sind, den Verbundwerkstoff (C) zu enthalten, indem sie am Verbundwerkstoff (C) anhaften oder nicht, und ihn während der Polymerisierung der Matrix in einer Form (A) zur Formgebung zu halten, wobei die Form (A) aus einem oder mehreren Materialien gebildet wird, die beim Verdichten dem Druck standhalten, der durch die Membran (F) am Verbundwerkstoff (C) angelegt wird,
ein Chassis (B), das die beiden Membrane (G, F) und die Form (A) in ihrer Peripherie und zueinander festhält,
ein oberes Gehäuse (E), das eine erste Flüssigkeit aufnimmt, deren Druck im Inneren des oberen Gehäuses (E) variabel ist, wobei das obere Gehäuse (E) durch die beiden Membrane (G, F) von der Form (A) getrennt ist,
**dadurch gekennzeichnet, dass** es ein unteres Gehäuse (D) umfasst, das eine zweite Flüssigkeit aufnimmt, und Mittel zum Regeln des Drucks der besagten zweiten Flüssigkeit im Inneren des unteren Gehäuses (D), die konfiguriert sind, um den Druck der besagten zweiten Flüssigkeit an der unteren Fläche der Form (A) variieren zu lassen, und um folglich die Verformung der Form (A) zu kontrollieren, während der Druck der ersten Flüssigkeit im oberen Gehäuse (E) variiert, wobei das obere (E) und das untere (D) Gehäuse beiderseits der Form (A) angeordnet sind,
und wobei die Form (A) im Verhältnis zum Chassis (B) an der Peripherie gehalten wird, und zumindest auf der Fläche porös ist, auf der der Verbundwerkstoff (C) imstande ist, angepasst zu werden, um die gesamte Flüssigkeit zu eliminieren, die zwischen der Form (A) und der Membran (G) enthalten ist, durch einen Druckgradienten der ersten und der zweiten Flüssigkeit bei der Formgebung des Verbundwerkstoffs (C) an der Oberfläche der Form (A).

2. Gerät nach Anspruch 1, **dadurch gekennzeichnet, dass** zumindest eine der beiden Membrane (G, F) aus einem Material ist, das am Verbundwerkstoff (C) anhaftet, um die Oberflächenbeschichtung eines fertigen Teils durch Anhaften an der Matrix bei der Polymerisierung derselben zu bilden.

3. Gerät nach Anspruch 1 oder 2, eine Verstärkung (H) umfassend, die durch das Chassis (B) an der Peripherie gehalten wird, und eine Zugfestigkeit aufweist, die konfiguriert ist, damit ihre Streckung bei der Druckbeaufschlagung der Flüssigkeiten im Inneren des Gerätes in jedem Fall kleiner ist, als die Zugbruchgrenze des oder der Materialien, die das Volumen der Form (A) bilden, in der der Verbundwerkstoff (C) imstande ist, geformt zu werden, wenn sich das Gerät im Bereich seiner Betriebstemperatur und seines Betriebsdrucks befindet.

4. Gerät nach irgendeinem der Ansprüche 1, 2 und 3, Bahnen umfassend, die an der Peripherie der Membrane (G, F) angeordnet sind, wobei die Bahnen dank geeigneter Peripherien die Beherrschung der vollständigen oder relativen Vakuumbeaufschlagung der Zone zwischen den Membranen (G, F), die Beherrschung der Injektion der Matrix des Verbundwerkstoffes (C) zwischen die Membrane (G, F), und die Beherrschung der Drainage nach außen des zwischen den Membranen (G, F) enthaltenen Volumens eines eventuellen Matrix-Überschusses durch die Tatsache eines Druckgradienten zwischen dem Druck in den Gehäusen im Inneren des Gerätes und dem Druck zu ermöglichen, der in der Zone vorherrscht, in die die Matrix extrahiert wird.

5. Gerät nach irgendeinem der Ansprüche 1, 2 3 und 4, Zonen in der Form (A) umfassend, die durch Dichtungen (J) an der Oberfläche der Form eingegrenzt werden, gegenüber oder nicht gegenüber von Taschen, die in oberen (K) und unteren (L) Pressgehäusen getrennt werden, sodass der Druck einer Flüssigkeit getrennt in den verschiedenen Gehäusen geregelt werden kann, die zwischen den so eingegrenzten Zonen der Form (A) und der unteren Membran (G) enthalten sind, die den Verbundwerkstoff (C) enthalten und in Kontakt mit der Form (A) stehen, und dabei die Möglichkeit bewahren, die Verformung der Form zu beherrschen, in der der Verbundwerkstoff (C) imstande ist, im Verhältnis zum Chassis (B) ausgeformt zu werden, und auf den Druck der Flüssigkeiten im Inneren der Taschen im unteren (L) und oberen (K) Gehäuse einzuwirken.

6. Gerät nach einem der Ansprüche 1 bis 5, **dadurch gekennzeichnet, dass** das Volumen der Form (A) aus porösem oder mikroporösem Keramik ist.

7. Gerät nach einem der Ansprüche 1 bis 6, **dadurch gekennzeichnet, dass** zumindest die Oberfläche der Form, in der der Verbundwerkstoff (C) geformt wird, aus porösem oder mikroporösem Keramik ist.

8. Gerät nach den Ansprüchen 3, 6 und 7, **dadurch gekennzeichnet, dass** die Verstärkung (H), die in die Form (A) integriert ist und für den Zugwiderstand der Form (A) sorgt, aus einem Matrix-Verbundstoff und Kohlefaser gebildet wird.

9. Gerät nach den Ansprüchen 3, 6, 7 und 8, wobei die Form (A) eine Keramikbeschichtung zur Wärmedämmung der Oberfläche zur Formgebung des Verbundwerkstoffs (C) umfasst, um die Wärmeamplitude in der Masse der Form (A) zu verringern, wodurch die Verwendung von Materialien mit unterschiedlichen Ausdehnungskoeffizienten zur Herstellung der Form (A) ohne Auswirkungen aufgrund der Temperaturen der Flüssigkeiten ermöglicht wird, die im Gerät verwendet werden.

10. Gerät nach den Ansprüchen 3, 6, 7, 8 und 9, Ausrüstungen umfassend, die konfiguriert sind, um die Form (A) zu erwärmen oder zu kühlen, um die Ausdehnung der Materialien, die die Form (A) bilden, unabhängig von den Temperaturen der Flüssigkeiten zu beherrschen, die im Gerät verwendet werden.

11. Gerät nach den Ansprüchen 1, 2, 4, 5, 6, 7, 9 und 10, **dadurch gekennzeichnet, dass** die Form (A), die zumindest an der Oberfläche zur Formgebung des Verbundwerkstoffes (C) porös ist, mit den Bahnen und den Peripherien bestückt im Gerät installiert wird, welche die Evakuierung der Flüssigkeiten nach außerhalb des Gehäuses des Gerätes zwischen der Membran (G) und, entweder einer Platte (B), oder einer steifen Wand (Y), deren Form durch eine Flüssigkeit kontrolliert wird, oder einer flexiblen Membran (Z) ermöglichen, die ein Gehäuse eingrenzt, in dem es möglich ist, den Druck einer Flüssigkeit zu beherrschen; die Form des peripheren Abschnitts der Form (A) ist dergestalt, dass wenn das Gerät auf seinem Betriebsdruck ist, die Form (A) einen isobaren Druck erhält, der durch die Membran (G) an ihrer Oberseite und die Membran (Z) an ihrer Unterseite angelegt wird, oder einen isobaren Druck auf ihrer Oberseite, der der durch den Widerstand der Platte (B) oder der Wand (Y) auf ihrer Unterseite ausgeglichen wird.

12. Gerät nach irgendeinem der vorhergehenden Ansprüche, wobei die erste und die zweite Flüssigkeit inkompressible Flüssigkeiten sind.

13. Verfahren zum Formen und Verdichten eines eine Matrix umfassenden Verbundwerkstoffs (C), die Verwendung eines Gerätes nach einem der vorhergehenden Ansprüche umfassend, sowie zur Ausformung und zum Halten des Verbundwerkstoffs (C) in der Form (A) während der Polymerisierung der Matrix.

14. Verfahren nach dem vorhergehenden Anspruch, eine Regelung des Drucks und der Temperatur der Flüssigkeiten in den Zonen des Geräts umfassend, wo Flüssigkeiten mithilfe von Zugängen und geeigneter Peripherien strömen.

15. Verfahren nach einem der beiden vorhergehenden Ansprüche, eine Beibehaltung in Position des Verbundwerkstoffs (C) nach der Polymerisierung der Matrix durch eine Unterdruckbeaufschlagung der Zone zwischen der Form (A) und dem Verbundwerkstoff (C) aufgrund der Porosität der Oberfläche der Form (A) umfassend, die es ermöglicht, in homogener Form den Druck einer Flüssigkeit zwischen dem Verbundwerkstoff (C) und der Form (A) zu beherrschen.

16. Verfahren nach einem der Ansprüche 13 oder 14, wobei eine Gegenform (M), welche ähnliche Merkmale aufweist, wie die Form (A), durch eine Membran (F) vom Verbundwerkstoff (C) getrennt gegenüber der Form (A) eingeführt wird; und wobei in der folgenden Phase die Membran, welche die Gegenform (M) abdeckt, durch eine Flüssigkeit zur Form (A) gedrückt wird, um den Druck zu vereinheitlichen, der von den Membranen ertragen wird, welche den Verbundwerkstoff (C) enthalten, wobei der Druck solange beibehalten wird, wie für die vollständige oder teilweise Polymerisierung der Matrix nötig ist, wonach entweder ein polymerisierbares Harz zwischen den Verbundwerkstoff (C) und die obere Membran (F), die den Verbundwerkstoff (C) enthält, in die Fläche gegenüber der Gegenform (M) mit dem Ziel eingespritzt oder eingegossen wird, den Abschnitt des Teils der Form der Gegenform (M) anzupassen, der sich ihr gegenüber befindet, oder es wird eine Blase (N) mithilfe der Bahnen und Peripherien aufgeblasen, die ausgeführt sind, um die Elemente des Verbundwerkstoffs, die zwischen den Membranen (G, F) enthalten sind, einerseits zur Form (A) und andererseits zur Gegenform (M) zu verschieben; wobei die Gegenform (M) eine Oberflächenporosität zumindest in der Zone aufweist, gegenüber der der Verbundwerkstoff (C) in Form gebracht wird, sodass der Druck der Flüssigkeit, der die Verdichtung des Verbundwerkstoffs (C) in der Form (A) ermöglicht, in einheitlicher Form auf der gesamten Oberfläche beherrscht werden kann, und die regelmäßige Verschiebung der Membran (F) zur Gegenform (M) und die Evakuierung der Flüssigkeit, die zwischen der Membran (F) und der Gegenform (M) enthalten ist, nach außerhalb der Presszone ermöglicht, durch einen Druckgradienten in der Harzinjektionsphase nach der vollständigen oder teilweisen Polymerisierung des Verbundwerkstoffs (C), der in der ersten Phase oder beim Aufblasen der Blase verfestigt wird, wodurch es möglich ist, den Verbundwerkstoff zwischen den Membranen (G, F) zu verschieben.

## Claims

1. Apparatus intended to form and compact a composite (C) provided with a matrix, said apparatus comprising:
two flexible and stretchable membranes (G, F) suitable for containing the composite (C) while being adhesive or non-adhesive to the composite (C) and maintaining it on a shaping mould (A) during the polymerisation of the matrix, the mould (A) consisting of one or more materials that resist compression by the pressure applied by the membrane (F) onto the composite (C),
a frame (B) maintaining the two membranes (G, F) and the mould (A) at their edge and relatively between them,
an upper chamber (E) receiving a first fluid, the pressure of which is variable inside the upper chamber (E), the upper chamber (E) being separated from the mould (A) by the two membranes (G, F),
**characterised in that** it comprises a lower chamber (D) receiving a second fluid and means for regulating the pressure of said second fluid inside the chamber (D), configured to vary the pressure of said second fluid on the lower surface of the mould (A) and thus to control the deformation of the mould (A) while the pressure of the first fluid varies in the upper chamber (E), the upper (E) and lower (D) chambers being positioned on either side of the mould (A),
and wherein the mould (A) is maintained at the edge with respect to the frame (B) and is porous at least on the surface on which the composite (C) is suitable for being shaped, in order to eliminate any fluid contained between the mould (A) and the membrane (G) via a pressure gradient of the first and second fluids during the shaping of the composite (C) at the surface of the mould (A).

2. Apparatus according to claim 1, **characterised in that** at least one of the two membranes (G, F) is made from a material adhesive to the composite (C) in such a way as to form the surface coating of a final part via adhesion to the matrix during the polymerisation of the latter.

3. Apparatus according to claims 1 and 2, comprising a reinforcement (H) maintained at the edge by the frame (B) having a tensile strength configured in order for the elongation thereof during the pressurisation of the fluids inside the apparatus to be in all cases less than the tensile strength at break of the material(s) forming the volume of the mould (A) on which the composite (C) is suitable for being shaped when the apparatus is in its working temperature and pressure range.

4. Apparatus according to any one of claims 1, 2 and 3, comprising pathways arranged at the edge of the membranes (G, F), the pathways allowing, via suitable peripherals, the control of the creation of a total or relative vacuum in the zone between the membranes (G, F), the control of the injection of the matrix of the composite (C) between the membranes (G, F) and the control of the draining, towards the outside of the volume between the membranes (G, F), of a possible excess of matrix via a pressure gradient between the pressure in the chambers inside the apparatus and the pressure in the zone to which the matrix is extracted.

5. Apparatus according to any one of claims 1, 2, 3 and 4, comprising zones in the mould (A) defined by sealing joints (J) at the surface of the mould, facing or not facing separate pockets in an upper (K) and lower (L) pressing chamber, in such a way that the pressure of a fluid can be generated separately in the various chambers between the zones of the mould (A) thus defined and the lower membrane (G) containing the composite (C) and in contact with the mould (A) while preserving the possibility of controlling the deformation of the mould on which the composite (C) is suitable for being shaped with respect to the frame (B) by influencing the pressure of fluids inside of the pockets in the lower (L) and upper (K) chamber.

6. Apparatus according to any one of claims 1 to 5, **characterised by** the fact that the volume of the mould (A) is made from porous or micro-porous ceramic.

7. Apparatus according to any one of claims 1 to 6, **characterised by** the fact that at least the surface of the mould on which the composite (C) is shaped is made from porous or micro-porous ceramic.

8. Apparatus according to claims 3, 6 and 7, **characterised by** the fact that the reinforcement (H) integrated into the mould (A) and providing the tensile strength of the mould (A) consists of a matrix and carbon fibre composite.

9. Apparatus according to claims 3, 6, 7 and 8, wherein the mould (A) comprises a ceramic coating for thermal insulation of the surface for shaping the composite (C) in order to reduce the temperature range in the mass of the mould (A), allowing the use of materials having different coefficients of expansion for the production of the mould (A) without any consequences caused by the temperatures of the fluids used in the apparatus.

10. Apparatus according to claims 3, 6, 7, 8 and 9, comprising equipment configured to heat or cool the mould (A) in order to control the expansion of the materials forming the mould (A) independently of the temperatures of the fluids used in the apparatus.

11. Apparatus according to claims 1, 2, 4, 5, 6, 7, 9 and 10, **characterised in that** the mould (A), porous at least on the surface for shaping the composite (C), is installed in the apparatus, provided with the pathways and the peripherals allowing the evacuation of the fluids towards the outside of the chamber of the apparatus, between the membrane (G) and either a plate (B), a rigid wall (Y), the shape of which is controlled by a fluid, or a flexible membrane (Z) defining a chamber in which the pressure of a fluid can be controlled; the shape of the peripheral portion of the mould (A) is such that when the apparatus is at its working pressure, the mould (A) receives an isobaric pressure applied by the membrane (G) onto its upper face and the membrane (Z) onto its lower face or an isobaric pressure on its upper face balanced by the resistance of the plate (B) or of the wall (Y) on its lower face.

12. Apparatus according to one of the previous claims, wherein the first and the second fluid are incompressible liquids.

13. Method for shaping and compacting a composite (C) comprising a matrix, involving the use of an apparatus according to one of the previous claims, and the shaping and the retention of the composite (C) in the mould (A) during the polymerisation of the matrix.

14. Method according to the previous claim, involving regulation of the pressure and of the temperature of the fluids in the zones of the apparatus in which fluids circulate with the help of suitable entrances and peripherals.

15. Method according to one of the two previous claims, involving retention of the composite (C) in position after polymerisation of the matrix by creation of a vacuum in the zone between the mould (A) and the composite (C) because of the porosity of the surface of the mould (A) allowing the pressure of a fluid between the composite (C) and the mould (A) to be controlled homogenously.

16. Method according to one of claims 13 and 14, wherein a counter-mould (M) having characteristics similar to the characteristics of the mould (A) is introduced facing the mould (A), separated from the composite (C) by a membrane (F); and wherein, during the following phase, the membrane covering the counter-mould (M) is pushed by a fluid towards the mould (A) in order to homogenise the pressure that the membranes containing the composite (C) undergo, the pressure being maintained for the time necessary for the total or partial polymerisation of the matrix, after which either a polymerisable resin is injected or infused between the composite (C) and the upper membrane (F) containing the composite (C) on the face facing the counter-mould (M) with the goal of making the portion of the part facing the latter conform to the shape of the counter-mould (M), or a bladder (N) is inflated using the suitable pathways and peripherals in order to move the elements of the composite contained between the membranes (G, F) towards the mould (A) for one portion and towards the counter-mould (M) for the other portion; the counter-mould (M) having a surface porosity at least in the zone opposite which the composite (C) is shaped in such a way that the pressure of the fluid allowing the compacting of the composite (C) onto the mould (A) can be controlled homogenously over the entire surface and allows the regular movement of the membrane (F) towards the counter-mould (M) and the evacuation of the fluid contained between the membrane (F) and the counter-mould (M) towards the outside of the pressing zone via a pressure gradient during the phase of injecting resin after total or partial polymerisation of the composite (C) compacted during the first phase or during the inflation of the bladder allowing the composite to be moved between the membranes (G, F).
